# EUROPÄISCHE PATENTSCHRIFT

(11) **EP 1 799 981 B1**
(45) Veröffentlichungstag und Bekanntmachung des Hinweises auf die Patenterteilung: **10.11.2010**
(21) Anmeldenummer: 05774351.0
(22) Anmeldetag: 17.08.2005
(51) Int. Cl.: F02B 19/10, F02B 19/12

(54) **VORRICHTUNG UND VERFAHREN ZUR ENTFLAMMUNG VON KRAFTSTOFF-LUFT-GEMISCHEN BEI EINEM VERBRENNUNGSMOTOR MIT VORKAMMERZÜNDUNG**
DEVICE AND METHOD FOR THE COMBUSTION OF FUEL/AIR MIXTURES IN AN INTERNAL COMBUSTION ENGINE WITH PRE-CHAMBER IGNITION
DISPOSITIF ET PROCEDE POUR L'INFLAMMATION DE MELANGES AIR-CARBURANT DANS UN MOTEUR A COMBUSTION INTERNE A ALLUMAGE DANS UNE PRECHAMBRE

(30) Priorität: 17.08.2004 DE 102004039818; 07.09.2004 DE 102004043143
(43) Veröffentlichungstag der Anmeldung: 27.06.2007
(73) Patentinhaber: Kuhnert-Latsch GbR, 74889 Sinsheim (DE)
(72) Erfinder: KUHNERT, Dieter, 74889 Sinsheim (DE); LATSCH, Reinhart, 76530 Baden-Baden (DE)
(74) Vertreter: Isenbruck, Günter
(86) Internationale Anmeldenummer: PCT/EP2005/008909
(87) Internationale Veröffentlichungsnummer: WO 2006/018291

(56) Entgegenhaltungen:
- DE-A1- 2 710 482
- DE-A1- 3 709 976
- DE-A1- 19 714 796
- US-A- 4 019 473
- US-A- 4 041 922
- US-A- 4 270 498
- US-A- 4 696 270
- US-A- 5 555 868
- US-B1- 6 378 489

## Beschreibung

Die Erfindung betrifft einen Verbrennungsmotor und ein Verfahren zum Betreiben eines Verbrennungsmotors für bei Normalbedingungen gasförmige Kraftstoffe mit Zündung in einer Vorkammer, insbesondere der Vorkammer einer Vorkammerzündkerze, wobei die Vorkammer insbesondere über mehrere Überströmkanäle mit dem Hauptbrennraum verbunden ist.

Dabei wird eine Kleinmenge des Kraftstoffs in die Vorkammer eingebracht, um dort die Zündbedingungen durch Gemischanfettung zu verbessern. Als Folge der Zündung und schnellen Energieumsetzung des in der Vorkammer gebildeten Gemischs werden Fackelstrahlen erzeugt, die mit sehr hoher Austrittsgeschwindigkeit in den Hauptbrennraum gelangen, um eine sichere, schnelle und gleichmäßige Entflammung des dort vorhandenen Kraftstoff-Luft-Gemischs zu bewirken.

Einrichtungen und Verfahren zur Entflammung von insbesondere mageren Kraftstoff-Luft-Gemischen bei einem Verbrennungsmotor mit Vorkammerzündung und Direkteinspritzung eines flüssigen Kraftstoffs mit Erzeugung einer gewünschten Gemischanfettung in der Vorkammer sind bekannt (DE 197 14 796). Dabei wird mit einer Hochdruckeinspritzung eine zur Gemischanfettung verwendete Kleinmenge des Kraftstoffs (vorzugsweise weniger als 5 % der insgesamt zugeführten Kraftstoffinenge) während des Verdichtungshubs in eine Kolbenmulde gespritzt, wobei nachfolgend durch das Eintauchen der Vorkammer in die Kolbenmulde bei Annäherung des Kolbens an den Oberen Totpunkt (OT) der Kraftstoff weitgehend flüssig oder teilweise verdampft und mit Brennraumgas vermischt über die Überströmkanäle in die Vorkammer gefördert und dort nachfolgend, nach Anreicherung des Gemischs in der Vorkammer, durch einen Zündfunken entflammt wird. Die Hauptmenge des Kraftstoffs (vorzugsweise mehr als 95 % der Gesamtmenge) wird bei diesem Verfahren während des Ansaughubs mit der Hochdruckeinspritzung durch das gleiche Einspritzventil in den Brennraum eingespritzt.

Um für beide Einspritzvorgänge voll befriedigende Eigenschaften zu erhalten, ist es notwendig, eine Einspritzdüse mit variablen Einspritzstrahlbildern zu verwenden. Dabei muss der Einspritzstrahl zur Einspritzung der Kleinmenge während des Kompressionshubs sehr kompakt sein, wohingegen er bei der Haupteinspritzung während des Saughubs eine möglichst weit aufgefächerte Struktur aufweisen sollte. Einspritzventile mit solchen Merkmalen sind teuer und störungsanfällig.

Dazu verlangt das verwendete Hochdruck-Einspritzverfahren eine aufwändige Hochdruck-Kraftstoffpumpe mit großem Kraftstoffdurchsatz und einer Kraftstoff-Hochdruckverteilung auf die einzelnen Einspritzventile. Die für die Pumpe benötigte Antriebsleistung vermindert zudem den effektiven Wirkungsgrad bzw. die maximale Leistung des Verbrennungsmotors.

Einrichtungen und Verfahren zur Entflammung eines Kraftstoff-Luft-Gemischs bei einem Verbrennungsmotor mit Vorkammerzündung mit Einbringen einer Kleinmenge eines gasförmigen Kraftstoffs in die Vorkammer sind ebenfalls bekannt (DE 37 09 976, DE 100 16 558). Bei dem erstgenannten Verfahren wird die gasförmige Kleinmenge von Kraftstoff während des Verdichtungshubs des Verbrennungsmotors über einen Versorgungskanal mit Rückschlagventil in den Bereich mindestens eines Überströmkanals außerhalb der Vorkammer gebracht, wobei ein Teil dieser Menge und das magere Gemisch aus dem Hauptbrennraum gemeinsam bei teilweiser Vermischung über Verbindungseinrichtungen, vorzugsweise tangential verlaufende Überströmkanäle, in die Vorkammer strömen und dort gezündet werden. Von Nachteil ist hierbei, dass die Zumessung einer Kleinmenge über ein Rückschlagventil ungenau ist, und nur ein Teil der Kleinmenge vergleichsweise spät in die Vorkammer gelangt, was zu Problemen bei der Homogenisierung des Gemischs in der Vorkammer führt. Zudem ergeben sich thermische Probleme, insbesondere am Ventil.

Zur Vermeidung der vorgenannten Probleme wird bei dem Verfahren nach dem zweiten Dokument die gasförmige Zusatzmenge während des Verdichtungshubs des Verbrennungsmotors über einen dünnen kapillarähnlichen Versorgungskanal direkt der Vorkammer zugeführt. Dabei ist die Gemischbildung in der Vorkammer verbessert, aber wegen der ebenfalls nur kurzen zur Verfügung stehenden Zeit für die möglichst vollständige Mischung von Kraftstoff und Luft in der Vorkammer immer noch unbefriedigend, so dass es zu Problemen bei der Funkenzündung kommt.

Das vorzugsweise magnetisch ansteuerbare Steuerventil für die Kleinmenge wird hier zur Vermeidung von thermischen Problemen am Steuerventil in einem größeren Abstand zur Vorkammer angeordnet. Es besteht aber die Gefahr, dass sich die Zuführungsleitung des Kraftstoffs zur Vorkammer als Folge von Ablagerungen unverbrannter Gasbestandteile zusetzt. Zudem ist die Herstellung einer dünnen Kapillare aufwändig und die Anordnung eines Kapillarträgers, z.B. in Form eines zweiteiligen Rohres im Zylinderkopf, wegen der dort vorhandenen Wasser- und Luftkanäle problematisch.

Es ist deshalb Aufgabe der vorliegenden Erfindung, bei einem Verbrennungsmotor mit Vorkammerzündung für bei Normalbedingungen gasförmige Kraftstoffe die Funktionssicherheit zu verbessern, die Systemkosten zu senken und eine Verbesserung der Gemischbildung in der Vorkammer und damit eine verbesserte Zündung in der Vorkammer zu erreichen. Gleichzeitig sollen die Schadstoffemissionen sowie der Kraftstoffverbrauch vermindert werden.

Eine Lösung der Aufgabe ist ein Verbrennungsmotor für bei Normalbedingungen gasförmige Kraftstoffe mit einem Hauptbrennraum und einer Vorkammer, in der eine Zündeinrichtung vorhanden ist, der von den im Oberbegriff des Anspruchs 1 aufgeführten Merkmalen ausgeht. Der erfindungsgemäße Motor weist dann die im kennzeichnenden Teil des Anspruchs 1 genannten Merkmale auf

In einer bevorzugten Ausführungsform hat dieser Verbrennungsmotor in der Einrichtung (a) mindestens eine Ansauganlage mit einem Saugrohr, in dem eine Kraftstoffzuführeinrichtung, insbesondere eine Saugrohr-Kraftstoffeinspritzung, für die Zufuhr der Hauptkraftstoffmenge vorhanden ist.

Bei gasförmigem Kraftstoff gehört in der Einrichtung (b) zur Direkteinspritzung ein von der Einrichtung (a) mit betriebenes gemeinsames Kraftstoff-Drucksystem oder ein von dieser Einrichtung getrenntes System, insbesondere mit mindestens zwei getrennten Einrichtungen, für den Kraftstoff.

Für gasförmige Kraftstoffe enthält der Verbrennungsmotor mindestens eine Verbindungseinrichtung als Überströmkanal zwischen dem Hauptbrennraum und dem Inneren der Vorkammer, bevorzugt mit mindestens einem konischen Abschnitt. Insbesondere ist die Vorkammer dabei eine Vorkammerzündkerze.

Eine weitere Lösung der Aufgabe ist eine Verfahren zum Betreiben eines Verbrennungsmotors durch ein erstes Zünden eines Gemischs aus einer ersten Menge eines bei Normalbedingungen gasförmigen Kraftstoffs und Luft in einer Vorkammer und ein Einbringen des so gezündeten und nachfolgend zumindest teilweise verbrannten Gemischs unter Entzünden des im Hauptbrennraum vorhandenen restlichen Kraftstoff-Luft-Gemischs. Das Verfahren ist dann **dadurch gekennzeichnet, dass** die erste Teilmenge des gasförmigen Kraftstoffs durch Direkteinspritzung in den Hauptbrennraum und nachfolgend durch den Kompressionsvorgang des Motors aus dem Hauptbrennraum über eine Vielzahl von Überströmkanälen in die Vorkammer gelangt und dort gemeinsam mit Teilen der beim Kompressionsvorgang aus dem Hauptbrennraum in die Vorkammer überströmenden Haupt-Kraftstoff-Luft-Gemischs das zu zündende Gemisch bildet, und dass die Gemischzusammensetzung in der Vorkammer zum Zündzeitpunkt geregelt wird, insbesondere durch den an der Zündeinrichtung gemessenen Ionenstrom. Dabei erfolgt die Direkteinspritzung entweder in einer frühen Phase des Kompressionsvorgangs für das Kraftstoff-Luft-Gemisch im Hauptbrennraum mit einem Druck < 20 bar, insbesondere < 10 bar, oder in einer späten Phase des Kompressionsvorgangs für das Kraftstoff-Luft-Gemisch im Hauptbrennraum mit einem Druck > 20 bar, insbesondere > 50 bar; hierbei wird die erste Teilmenge des gasförmigen Kraftstoffs für die Direkteinspritzung einem Tank entnommen, der für die Entnahme dieser Teilmenge und für die Hauptmenge an Kraftstoff ausgebildet ist, oder diese Mengen werden aus zwei getrennten Tankteilen entnommen.

Bei dem gasförmigen Kraftstoff wird die erste Teilmenge bevorzugt aus dem zweiten separaten Tankteil entnommen, wobei das Gas Wasserstoff ist oder diesen enthält oder eine wasserstoffreiche Verbindung, insbesondere Methan, wobei der Wasserstoffgehalt im Falle einer wasserstoffreichen Verbindung wie Methan durch einen zwischen Tank und der Einrichtung zur Direkteinspritzung angeordneten Reaktor erzeugt oder erhöht wird. Der Reaktor ist insbesondere ein Plasmareaktor.

In allen Fällen wird die Gemischzusammensetzung, bevorzugt in der Vorkammer, zum Zündzeitpunkt geregelt, insbesondere durch den an der Zündeinrichtung gemessenen Ionenstrom.

Zur Verminderung der NOx-Emission kann ein Teil des Abgases des Verbrennungsmotors in das Saugrohr zurückgeführt werden.

Bevorzugte Ausführungsbeispiele der Erfindung sind der Zeichnung dargestellt und werden nachfolgend näher erläutert. Dies zeigt in:

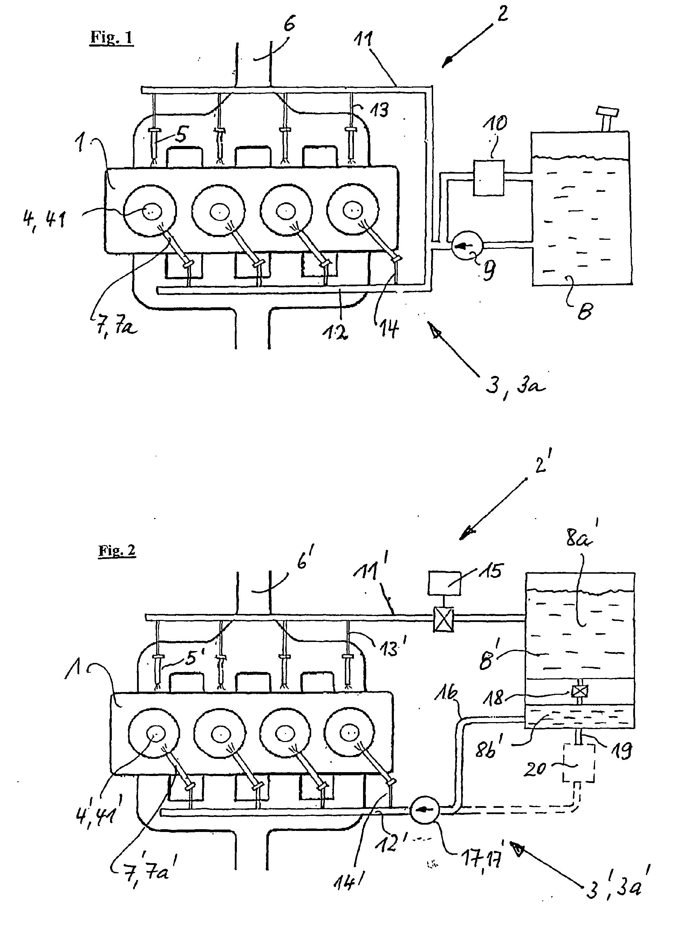

**Fig. 1** einen beispielhaften Vierzylinder-Verbrennungsmotor nach dem Stand der Technik mit 4 Vorkammern, insbesondere Vorkammerzündkerzen, sowie 4 Einspritzventile für die Kraftstoff-Saugrohreinspritzung und 4 Einspritzventile für die Direkteinspritzung und der Kraftstoffversorgung für die insgesamt 8 Einspritzventile für den Fall der Einspritzung von flüssigem Kraftstoff sowie die Kraftstoffversorgung;
**Fig. 2** einen beispielhaften erfindungsgemäßen Vierzylinder-Verbrennungsmotor mit 4 Vorkammern, insbesondere Vorkammerzündkerzen, sowie 4 Einspritzventile für die Kraftstoff-Saugrohreinspritzung und 4 Einspritzventile für die Direkteinspritzung und der Kraftstoffversorgung für die insgesamt 8 Einspritzventile für den Fall der Einspritzung von gasförmigem Kraftstoff sowie die Kraftstoffversorgung;

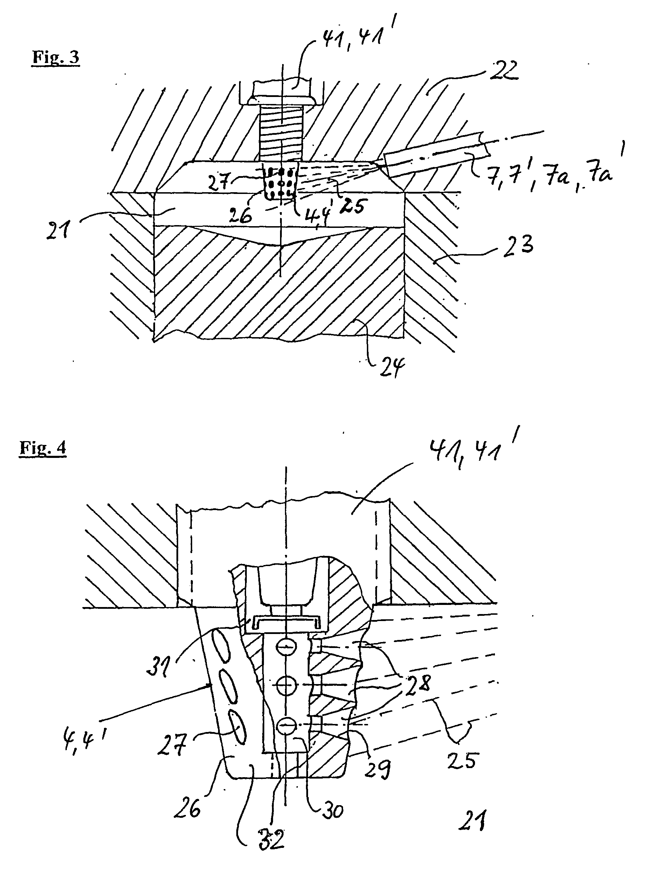

**Fig. 3** einen Schnitt durch einen Zylinder des Verbrennungsmotors, mit einer Vorkammer im vorderen Teil einer Vorkammerzündkerze, Einspritzdüse und Einspritzstrahl für die Kleinmenge von gasförmigem Kraftstoff, wobei der Kraftstoff in Richtung auf die Vorkammer direkt eingespritzt wird;
**Fig. 4** einen Teilschnitt durch die Vorkammer für die Anordnung mit dem Einspritzstrahl für die Kleinmenge von gasförmigem Kraftstoff in Richtung auf die Vorkammer, die Teil einer Vorkammerzündkerze ist.

**Fig. 1** zeigt einen Vierzylinder-Verbrennungsmotor (1) mit Einrichtung zur Bildung der Hauptmenge eines Gemischs aus Kraftstoff und Luft und dessen Einbringen in den Hauptbrennraum (2), eine Einrichtung zur Direkteinspritzung einer ersten Kleinmenge des Kraftstoffs in den Hauptbrennraum (3) sowie 4 Vorkammern (4), wobei die Vorkammer insbesondere jeweils ein Teil einer Vorkammerzündkerze (41) ist, sowie 4 Einspritzventile (5) für die Saugrohreinspritzung mit einem Saugrohr (6) und 4 Einspritzventile für die Direkteinspritzung (7) für den Fall, dass für beide Einspritzungen flüssiger Kraftstoff bei niedrigem Druck aus einem gemeinsamen Drucksystem verwendet wird. Die Kraftstoffversorgung erfolgt dabei von einem Tank (8) über eine Niederdruck-Förderpumpe (9) mit parallel zwischen der Druckseite der Pumpe und dem Tank angeordnetem Druckregler (10). Die Ventile für die Saurohr- und die Kleinmengen-Direkteinspritzung (5, 7) werden über Kraftstoffleitungen (11, 12) und über Abzweigungen (13, 14) mit Kraftstoff versorgt.

Alternativ ist es hier möglich, dass für die Direkteinspritzung einer ersten Kleinmenge des Kraftstoffs (3) ein unterschiedliches oder zusätzliches Drucksystem (3a) oder ein Einspritzventil mit Druckverstärkung (7a) verwendet wird.

**Fig. 2** zeigt einen Vierzylinder Verbrennungsmotor (1) mit Einrichtung zur Bildung der Hauptmenge eines Gemischs aus gasförmigem Kraftstoff und Luft und dessen Einbringen in den Hauptbrennraum (2'), eine Einrichtung zur Direkteinspritzung einer ersten Kleinmenge des gasförmigen Kraftstoffs in den Hauptbrennraum (3') sowie 4 Vorkammern (4'), wobei die Vorkammer insbesondere jeweils ein Teil einer Vorkammerzündkerze (41') ist, sowie 4 Einspritzventile (5') für die Saugrohreinspritzung und 4 Einspritzventile für die Direkteinspritzung (7') für den Fall, dass für beide Einspritzungen gasförmiger Kraftstoff aus einem getrennten System mit zwei getrennten Einrichtungen (2' und 3') verwendet wird. Die Versorgung der Einspritzventile (7') mit gasförmigem Kraftstoff erfolgt dabei aus einem Hochdruck-Tank (8'). Dabei wird vorteilhaft aus einem größeren Tankteil 8a' die Hauptmenge des gasförmigen Kraftstoffs entnommen. Die Einspritzventile für die Saugrohr- und die Kleinmengen-Direkteinspritzung (5', 7') werden über Kraftstoffleitungen (11', 12') und über Abzweigungen (13', 14') mit gasförmigem Kraftstoff versorgt. In die Kraftstoffleitung für die Hauptmenge (11') ist zur Einstellung eines passenden Einspritzdrucks ein Reduzierventil (15) angeordnet.

Die Einspritzventile (7') für die Hochdruck-Direkteinspritzung der Kleinmenge werden aus dem kleineren Tankteil (8b') mit unter hohem Druck stehendem gasförmigem Kraftstoff versorgt. Zur Aufrechterhaltung eines ausreichend hohen Drucks für die Hochdruck-Direkteinspritzung der Kleinmenge ist zwischen einer Zuleitung (16) und der Kraftstoffleitung (12') noch eine Hochdruckpumpe (17) angeordnet. Zudem wird zur Verminderung des Leistungsbedarf der Hochdruckpumpe (17) oder dessen vorteilhafter Vermeidung zwischen dem größeren Tankteil für die Hauptmenge (8a') und dem kleineren Tankteil (8b') für die Direkteinspritzung der Kleinmenge ein Steuerventil (18) angeordnet, das beim Tankvorgang für den Tankteil für die Hauptmenge (8a') bei hohem Tankfülldruck im Tankteil (8b') geöffnet und danach wieder geschlossen wird.

Alternativ ist auch ein vereinfachtes Gesamtsystem für die Kraftstoffversorgung möglich, bei dem für die Direkteinspritzung einer ersten Kleinmenge (3a') das gleiche Drucksystem wie für die Haupteinspritzung (2') verwendet wird, wobei der gasförmige Kraftstoff aus einem gemeinsamen Tank entnommen wird.

Zur Verbesserung der Zündungs- und Verbrennungseigenschaften kann bei ausgewählten wasserstoffreichen Kraftstoffen, insbesondere Methan oder Erdgas, die Kleinmenge Gas auch alternativ über eine Leitung (19) durch einen Reaktor (20) geführt werden, mit dem ein wasserstoffreiches Gas erzeugt wird, wobei vorteilhaft der Reaktor ein Plasmareaktor ist, in dem eine teilweise Umsetzung des Methan zu Wasserstoff durchgeführt wird. Auch hier kann vorteilhaft eine Hochdruckpumpe (17') verwendet werden.

**Fig. 3** zeigt einen Schnitt durch einen Brennraum (21) eines Zylinders des Verbrennungsmotors mit Zylinderkopf (22), Motorblock (23) und Kolben (24), wobei der Einspritzstrahl (25) des Einspritzventils (7, 7a, 7', 7a') für die Kleinmenge des gasförmigen Kraftstoffs im Wesentlichen in Richtung auf eine Vorkammer (4, 4'), insbesondere auf den vorderen Teil des Gehäuses (26) der Vorkammer gerichtet ist, wobei die Vorkammer insbesondere die Vorkammer einer Vorkammerzündkerze (41, 41') ist. Dabei wird der gasförmige Kraftstoff mit Brennraumgas vermischt über eine Vielzahl von Überströmkanälen (27), als Folge des Druckanstiegs im Brennraum beim Kompressionsvorgang, in die Vorkammer gefördert und in dieser gezündet.

Damit eine möglichst große Menge des abgespritzten gasförmigen Kraftstoffs über die Überströmkanäle (27) in die Vorkammer gelangt, ist der Einspritzstrahl (25) so dimensioniert, dass eine größere Anzahl der Überströmkanäle vom gasförmigen Kraftstoff unmittelbar getroffen wird.

**Fig. 4** zeigt einen Teilschnitt durch die Vorkammer (4, 4') der Vorkammerzündkerze (41, 41'), sowie den vorderen Teil des Einspritzstrahls (25) nach Fig. 3. Dabei ist zu erkennen, dass von der Gesamtzahl der Überströmkanäle (27) nur eine Teilmenge (28) von dem direkt eingespritzten Kraftstoffstrahl getroffen wird. Die Überströmkanäle sind vorteilhaft im vorderen Teil konisch ausgebildet (29), so dass der gasförmige Kraftstoff, der nicht direkt in das Innere der Vorkammer (30), aber in den konischen Bereich (29) gelangt, durch das während des Verdichtungstakts in das Innere der Vorkammer strömende Gemisch aus dem Hauptbrennraum (21) mitgerissen und in das Innere der Vorkammer (30) transportiert wird. Dabei wird durch die mit großer Geschwindigkeit in die Vorkammer eintretende Gemisch eine gute Homogenisierung und damit ein besonders gut zündfähiges Gemisch gebildet.

Nach Funkenzündung dieses, gegenüber dem Gemisch im Hauptbrennraum "angefetteten" Gemischs im hier beispielhaft radial ausgebildeten Elektrodenspalt (31) im Inneren der Vorkammer (30), kommt es in der Vorkammer zu einer sehr schnellen Energieumsetzung des Kraftstoff-Luft-Gemischs, wodurch eine Vielzahl von Fackelstrahlen mit besonders hoher Austrittsgeschwindigkeit in den Hauptbrennraum hinein, erzeugt werden. Um dabei die Energieumsetzung im Zentrum des Hauptbrennraums (21) zu verbessern, ist im vorderen Bereich der Vorkammer ein weiterer Überströmkanal (32) angeordnet.

Die Gemischzusammensetzung in der Vorkammer wird vorteilhaft geregelt, wobei vorzugsweise die Gemischzusammensetzung zum Zündzeitpunkt optimal eingestellt wird. Der an den Zündelektroden nach dem Einleiten der Zündung bestimmte Ionenstrom ist dabei eine erfolgreich erprobte Größe ist, die sich zur Regelung der Kleinmenge besonders gut eignet.

## Patentansprüche

1. Verbrennungsmotor (1) für bei Normalbedingungen gasförmige Kraftstoffe mit einem Hauptbrennraum (21) und einer Vorkammer (4, 4', 41, 41'), in der eine Zündeinrichtung (31) vorhanden ist, der umfasst
(a) eine Einrichtung (2, 2'), zur Bildung der Hauptmenge eines Gemischs aus gasförmigem Kraftstoff und Luft und dessen Einbringen in den Hauptbrennraum,
(b) eine Einrichtung (3, 3a, 3', 3a') zur Direkteinspritzung einer Kleinmenge des gasförmigen Kraftstoffs in den Hauptbrennraum zur Bildung eines Gemischs aus diesem Kraftstoff und weiterem gasförmigen Kraftstoff aus dem Hauptbrennraum und Luft in der Vorkammer,
(c) eine Vielzahl von Verbindungseinrichtungen (27) zwischen dem Hauptbrennraum und dem Inneren der Vorkammer (30), wobei mindestens eine Verbindungseinrichtung als Überströmkanal zwischen dem Hauptbrennraum und dem Inneren der Vorkammer (30) ausgebildet ist und die Vorkammer (4, 4') insbesondere die Vorkammer einer Vorkammerzündkerze (41, 41') ist, und wobei die Mehrzahl der Vielzahl von Verbindungseinrichtungen (27) seitlich, insbesondere im Wesentlichen gleichmäßig und symmetrisch am Umfang des in den Brennerraum ragenden Teils (26) der Vorkammer (4, 4') angeordnet ist, **dadurch gekennzeichnet, dass** die Direkteinspritzung im Wesentlichen in Richtung der Vorkammer (4, 4') erfolgt und eine größere Anzahl von Verbindungseinrichtungen (27) vom Kraftstoff unmittelbar getroffen wird, wobei zur Direkteinspritzung ein von der Einrichtung (a) mit betriebenes gemeinsames Drucksystem (3, 3a) oder ein von der Einrichtung (a) getrenntes System (3', 3a'), insbesondere mit mindestens zwei getrennten Einrichtungen (2' und 3'), für den gasförmigen Kraftstoff verwendet wird.

2. Verbrennungsmotor nach Anspruch 1, **dadurch gekennzeichnet, dass** die Einrichtung (a) mindestens eine Ansauganlage mit Saugrohr (6, 6') aufweist, in dem eine Kraftstoffzuführeinrichtung, insbesondere eine Saugrohr-Kraftstoffeinspritzung (5, 5'), vorhanden ist.

3. Verbrennungsmotor nach Anspruch 1 oder 2, **dadurch gekennzeichnet, dass** der Überströmkanal (27) mindestens einen konischen Abschnitt (29) aufweist.

4. Verfahren zum Betreiben eines Verbrennungsmotors durch ein Zünden eines Gemischs aus einer ersten Teilmenge eines bei Normalbedingungen gasförmigen Kraftstoffs und Luft in einer Vorkammer und ein Einbringen des so gezündeten und nachfolgend zumindest teilweise verbrannten Gemischs unter Entzünden des im Hauptbrennraum vorhandenen Kraftstoff-Luft-Gemischs, wobei die erste Teilmenge des gasförmigen Kraftstoffs durch Direkteinspritzung in den Hauptbrennraum und nachfolgend durch den Kompressionsvorgang des Motors aus dem Hauptbrennraum über eine Vielzahl von Überströmkanälen in die Vorkammer gelangt und dort gemeinsam mit Teilen des beim Kompressionsvorgang aus dem Hauptbrennraum in die Vorkammer überströmenden Haupt-Kraftstoff-Luft-Gemischs das zu zündende Gemisch bildet, **dadurch gekennzeichnet, dass** die Direkteinspritzung im Wesentlichen in Richtung der Vorkammer erfolgt und die Gemischzusammensetzung in der Vorkammer zum Zündzeitpunkt geregelt wird, insbesondere durch den an der Zündeinreichung gemessenen Ionenstrom, dass die Direkteinspritzung in einer frühen Phase des Kompressionsvorgangs für das Kraftstoff-Luft-Gemisch im Hauptbrennraum mit einem Druck < 20 bar, insbesondere < 10 bar, oder einer späten Phase des Kompressionsvorgangs für das Kraftstoff-Luft-Gemisch im Hauptbrennraum mit einem Druck > 20 bar, insbesondere > 50 bar erfolgt, und dass die erste Teilmenge des gasförmigen Kraftstoffs für die Direkteinspritzung einem Tank (8) entnommen wird, der für die Entnahme dieser Teilmenge und für die Hauptmenge an gasförmigem Kraftstoff ausgebildet ist, oder diese Mengen aus zwei getrennten Tankteilen (8a', 8b') entnommen werden.

5. Verfahren nach Anspruch 4, **dadurch gekennzeichnet, dass** die erste Teilmenge des Kraftstoffs aus dem zweiten separaten Tankteil (8b') entnommen wird, wobei das Gas Wasserstoff ist oder dieses enthält oder eine wasserstoffreiche Verbindung, insbesondere Methan, enthält.

6. Verfahren nach Anspruch 5, **dadurch gekennzeichnet, dass** der Wasserstoffgehalt im Falle einer wasserstoffreichen Verbindung durch einen zwischen Tank und der Einrichtung zur Direkteinspritzung angeordneten Reaktor (20) erzeugt oder erhöht wird, wobei der Reaktor vorteilhaft ein Plasmareaktor ist.

7. Verfahren nach einem der Ansprüche 4 bis 6, **dadurch gekennzeichnet, dass** ein Teil des Abgases des Verbrennungsmotors zur Verminderung der NOx-Emission des Verbrennungsmotors in das Saugrohr zurückgeführt wird.

## Claims

1. Internal combustion engine (1) for fuels which are gaseous under normal conditions, having a main combustion chamber (21) and a pilot chamber (4, 4', 41, 41') in which an ignition device (31) is provided, which internal combustion engine (1) comprises
(a) a device (2, 2') for forming the main quantity of a mixture of gaseous fuel and air and introducing it into the main combustion chamber,
(b) a device (3, 3a, 3', 3a') for directly injecting a small quantity of the gaseous fuel into the main combustion chamber to form a mixture of said fuel and further gaseous fuel from the main combustion chamber and air in the pilot chamber,
(c) a multiplicity of connecting devices (27) between the main combustion chamber and the interior of the pilot chamber (30), with at least one connecting device being formed as an overflow duct between the main combustion chamber and the interior of the pilot chamber (30), and with the pilot chamber (4, 4') being in particular the pilot chamber of a pilot chamber spark plug (41, 41'), and with the majority of the multiplicity of connecting devices (27) being arranged laterally, in particular substantially uniformly and symmetrically on the circumference of that part (26) of the pilot chamber (4, 4') which projects into the burner chamber, **characterized in that** the direct injection takes place substantially in the direction of the pilot chamber (4, 4') and a relatively high number of connecting devices (27) are impinged on directly by the fuel, wherein for the direct injection use is made of a common pressure system (3, 3a) which is concomitantly driven by the device (a), or a system (3', 3a') which is separate from the device (a), in particular having at least two separate devices (2' and 3'), for the gaseous fuel.

2. Internal combustion engine according to Claim 1, **characterized in that** the device (a) has at least one intake system with an intake pipe (6, 6') in which a fuel supply device, in particular an intake pipe fuel injection (5, 5'), is provided.

3. Internal combustion engine according to Claim 1 or 2, **characterized in that** the overflow duct (27) has at least one conical section (29).

4. Method for operating an internal combustion engine by means of an ignition of a mixture of a first partial quantity of a fuel which is gaseous under normal conditions and air in a pilot chamber, and introduction of the thus ignited and subsequently at least partially burned mixture with ignition of the fuel/air mixture present in the main combustion chamber, with the first partial quantity of the gaseous fuel passing by direct injection into the main combustion chamber and subsequently, as a result of the compression process of the engine, passing out of the main combustion chamber via a multiplicity of overflow ducts into the pilot chamber, and there, forming the mixture to be ignited together with parts of the main fuel/air mixture flowing over from the main combustion chamber into the pilot chamber during the compression process, **characterized in that** the direct injection takes place substantially in the direction of the pilot chamber and the mixture composition in the pilot chamber at the ignition time is regulated, in particular by means of the ion current measured at the ignition device, **in that** the direct injection takes place in an early phase of the compression process for the fuel/air mixture in the main combustion chamber with a pressure < 20 bar, in particular < 10 bar, or in a late phase of the compression process for the fuel/air mixture in the main combustion chamber with a pressure > 20 bar, in particular > 50 bar, and **in that** the first partial quantity of the gaseous fuel for the direct injection is extracted from a tank (8) which is designed for the extraction of said partial quantity and for the main quantity of gaseous fuel, or said quantities are extracted from two separate tank parts (8a', 8b').

5. Method according to Claim 4, **characterized in that** the first partial quantity of the fuel is extracted from the second separate tank part (8b'), with the gas being or containing hydrogen or containing a hydrogen-rich compound, in particular methane.

6. Method according to Claim 5, **characterized in that** the hydrogen content in the case of a hydrogen-rich compound is generated or increased by means of a reactor (20) arranged between the tank and the device for direct injection, with the reactor advantageously being a plasma reactor.

7. Method according to one of Claims 4 to 6, **characterized in that** a part of the exhaust gas of the internal combustion engine is recirculated into the intake pipe in order to reduce the NOx emission of the internal combustion engine.

## Revendications

1. Moteur à combustion (1) pour des carburants gazeux dans des conditions normales, comprenant une chambre de combustion principale (21) et une préchambre (4, 4', 41, 41') dans laquelle est présent un dispositif d'allumage (31), qui comprend :
(a) un dispositif (2, 2') pour la formation de la quantité principale d'un mélange de carburant gazeux et d'air et pour son introduction dans la chambre de combustion principale ;
(b) un dispositif (3, 3a, 3', 3a') pour l'injection directe d'une petite quantité du carburant gazeux dans la chambre de combustion principale afin de former un mélange de ce carburant et d'une quantité supplémentaire de carburant gazeux provenant de la chambre de combustion principale et d'air dans la préchambre ;
(c) une multitude de dispositifs de liaison (27) entre la chambre de combustion principale et l'intérieur de la préchambre (30), au moins un dispositif de liaison étant réalisé sous la forme d'un canal de passage entre la chambre de combustion principale et l'intérieur de la préchambre (30), et la préchambre (4, 4') représente en particulier la préchambre d'une bougie d'allumage de préchambre (41, 41'), la majeure partie de la multitude des dispositifs de liaison (27) étant disposée latéralement, en particulier de manière essentiellement uniforme et symétrique à la périphérie de la partie (26) de la préchambre (4, 4') faisant saillie dans la chambre de combustion, **caractérisé en ce que** l'injection directe a lieu essentiellement dans la direction de la préchambre (4, 4') et un nombre assez élevé de dispositifs de liaison (27) sont mis directement en contact avec le carburant, moteur dans lequel, pour l'injection directe, on utilise un système de pression commun (3, 3a) entraîné de manière conjointe par le dispositif (a) ou un système (3', 3a') séparé du dispositif (a), comprenant en particulier au moins deux dispositifs séparés (2' et 3'), pour le carburant gazeux.

2. Moteur à combustion selon la revendication 1, **caractérisé en ce que** le dispositif (a) présente au moins une installation d'aspiration comprenant un tuyau d'aspiration (6, 6'), dans laquelle est présent un dispositif d'alimentation en carburant, en particulier une injection de carburant via un tuyau d'aspiration (5, 5').

3. Moteur à combustion selon la revendication 1 ou 2, **caractérisé en ce que** le canal de passage (27) présente au moins un tronçon conique (29).

4. Procédé pour l'entraînement d'un moteur à combustion via un allumage d'un mélange constitué par une première quantité partielle d'un carburant gazeux dans des conditions normales et par de l'air dans une préchambre et via une introduction du mélange ainsi allumé et qui a subi par la suite une combustion au moins partielle avec inflammation du mélange carburant-air présent dans la chambre de combustion principale, la première quantité partielle du carburant gazeux aboutissant par injection directe dans la chambre de combustion principale et ensuite, via le processus de compression du moteur, hors de la chambre de combustion principale, en passant par une multitude de canaux de passage, dans la préchambre, et formant à cet endroit, conjointement avec des parties du mélange principal carburant-air passant dans la préchambre en provenance de la chambre de combustion principale lors du processus de compression, le mélange à enflammer, **caractérisé en ce que** l'injection directe a lieu essentiellement dans la direction de la préchambre et la composition du mélange dans la préchambre au moment d'allumage est réglée, en particulier via le courant ionique mesuré sur le dispositif d'allumage, **en ce que** l'injection directe, dans une phase précoce du processus de compression pour le mélange carburant-air, a lieu dans la chambre de combustion principale sous une pression < 20 bar, en particulier < 10 bar, ou bien, dans une phase tardive du processus de compression pour le mélange carburant-air, dans la chambre de combustion principale sous une pression > 20 bar, en particulier > 50 bar, et **en ce que** la première quantité partielle du carburant gazeux pour l'injection directe est prélevée d'un réservoir (8) qui est réalisé pour le prélèvement de cette quantité partielle et pour la quantité principale de carburant gazeux, ou bien ces quantités sont prélevées de deux parties séparées de réservoir (8a', 8b').

5. Procédé selon la revendication 4, **caractérisé en ce que** la première quantité partielle du carburant est prélevée de la deuxième partie séparée de réservoir (8b'), le gaz étant de l'hydrogène ou contenant ce dernier ou bien contenant un composé riche en hydrogène, en particulier du méthane.

6. Procédé selon la revendication 5, **caractérisé en ce qu'**on obtient ou on augmente la teneur en hydrogène, dans le cas d'un composé riche en hydrogène, via un réacteur (20) monté entre le réservoir et le dispositif pour l'injection directe, le réacteur représentant de préférence un réacteur à plasma.

7. Procédé selon l'une quelconque des revendications 4 à 6, **caractérisé en ce qu'**une partie des gaz d'échappement du moteur à combustion est renvoyée dans le tuyau d'aspiration afin de réduire les émissions de NOx du moteur à combustion.
